# EUROPÄISCHE PATENTANMELDUNG

(11) **EP 1 449 492 A1**
(43) Veröffentlichungstag der Anmeldung: **25.08.2004**
(21) Anmeldenummer: 04003646.9
(22) Anmeldetag: 18.02.2004
(51) Int. Cl.: A61C 1/00

(54) **Steuerschaltung für ein zahnärztliches Handstück**

(30) Priorität: 18.02.2003 DE 10306798
(71) Anmelder: Kaltenbach & Voigt GmbH & Co. KG, 88400 Biberach/Riss (DE)
(72) Erfinder: Schmid, Gerhard, 88441 Mittelbiberach (DE)
(74) Vertreter: Schmidt-Evers, Jürgen, Dipl.-Ing.

(57) **Zusammenfassung**

Eine Steuerschaltung zur Steuerung einer Medien-Heizungseinrichtung (12, 22) eines zahnärztlichen Handstücks (1) weist einen Heizstromkreis (20) auf, in dem ein von Hand zu betätigender Schalter (S1, S2) für die Aktivierung der Heizungseinrichtung (12, 22) angeordnet ist. Um die Heizungseinrichtung (12, 22) gezielt deaktivieren zu können, ist in dem Heizstromkreis (20) ferner ein weiteres steuerbares Schaltelement (V1, V2) angeordnet, welches in Abhängigkeit von einem externen Steuersignal (VCC, Vₒₙ) in einen leitenden bzw. nicht-leitenden Zustand versetzbar ist.

## Beschreibung

Die vorliegende Erfindung betrifft eine Steuerschaltung für ein zahnärztliches Handstück gemäß dem Oberbegriff des Anspruches 1. Insbesondere betrifft die Erfindung eine Steuerschaltung zur Steuerung einer Heizungseinrichtung eines zahnärztlichen Handstücks.

Zahnärztliche Handstücke weisen oftmals Medienleitungen für Luft und Wasser auf, welche die Möglichkeit eröffnen, die zu behandelnde bzw. gerade behandelte Stelle im Mund des Patienten mit Luft und/oder Wasser zu reinigen bzw. zu trocknen. Sogenannte Spritzhandstücke sind sogar ausschließlich dazu vorgesehen, Luft oder Wasser auf bestimmte Stellen zu richten. Ein derartiges zahnärztliches Spritzhandstück ist beispielsweise aus der DE 195 39 534 A1 der Anmelderin bekannt.

In der Regel bieten zahnärztliche Handstücke der oben angegebenen Art darüber hinaus auch die Möglichkeit, die abzugebenden Medien auf Körpertemperatur zu erwärmen, um bei dem Patienten, in dessen Mundraum sie eingesetzt werden, keine Reflexe oder Abwehrreaktionen hervorzurufen. Zum Erwärmen der Medien sind in dem Handstück Heizungseinrichtungen in Form von Heizpatronen oder in den Medienleitungen angeordneten Heizwendeln vorgesehen, die an einen Heizstromkreis angeschlossen sind. Der Heizstromkreis ist mit einem Schalter verbunden, der von dem Benutzer des Handstücks aktiviert werden kann, um den Heizstromkreis zu schließen und damit die Heizungseinrichtung zu aktivieren.

Die DE 195 39 534 A1 beschreibt eine Möglichkeit, die Heizungseinrichtungen nach Betätigen der entsprechenden Schalter für die Medienventile automatisch zu aktivieren. Es wird eine Schaltungsanordnung beschrieben, welche nach einem Betätigen des Schalters ein entsprechendes Steuersignal zum Schließen des Heizstromkreises generiert. Darüber hinaus wird gleichzeitig mit dem Aktivieren der Heizungseinrichtung ein Lichtstromkreis geschlossen und damit eine in dem Handstück angeordnete Lichtquelle eingeschaltet, welche ein Ausleuchten des von der Austrittsöffnung des zahnärztlichen Handstücks anvisierten Bereichs bewirkt.

Die bekannte Steuerschaltung besteht aus verhältnismäßig vielen Einzelkomponenten und ist dementsprechend relativ kostenaufwendig herzustellen. Darüber hinaus wird bei einer Betätigung des Schalters für das Medienventil automatisch auch die entsprechende Medienheizung aktiviert, was während einer zahnärztlichen Behandlung zwar in der Regel erwünscht ist, in anderen Situationen - beispielsweise während einer Intensiventkeimung- bzw. Reinigungsprozedur, in der die Medienleitungen des Handstücks mit einer Reinigungslösung durchspült werden - allerdings eher als nachteilig angesehen wird.

Der vorliegenden Erfindung liegt daher die Aufgabe zugrunde, eine alternative Lösung zur Steuerung einer Heizungseinrichtung eines zahnärztlichen Handstücks anzugeben, welche sich insbesondere durch ihren einfachen Aufbau auszeichnet soll. Darüber hinaus soll die Möglichkeit eröffnet werden, die Medienheizung in bestimmten Situationen gezielt zu deaktivieren.

Die Aufgabe wird durch eine Steuerschaltung zur Steuerung einer Medien-Heizungseinrichtung eines zahnärztlichen Handstücks gelöst, welche die Merkmale des Anspruchs 1 aufweist.

Die erfindungsgemäße Steuerschaltung weist zunächst einen Heizstromkreis auf, in dem ein von Hand zu betätigender Schalter für die Aktivierung der Heizungseinrichtung angeordnet ist. Erfindungsgemäß ist in dem Heizstromkreis ferner ein weiteres steuerbares Schaltelement angeordnet, welches in Abhängigkeit von einem externen Steuersignal in einen leitenden bzw. nicht-leitenden Zustand versetzt werden kann.

Die erfindungsgemäße Lösung eröffnet somit die Möglichkeit, die Heizung über ein externes Steuersignal vollständig abzuschalten, so dass selbst bei einer Betätigung des Schalters keine Erwärmung der Medien erfolgt. Die Heizung kann damit über die externe Gerätesteuerung des Handstücks ein- bzw. ausgeschaltet werden. Insbesondere kann sie ausgeschaltet werden, wenn die Medienleitungen zu Reinigungszwecken mit einer Reinigungsflüssigkeit durchspült werden.

Gemäß einer vorteilhaften Weiterbildung der Erfindung ist der Heizstromkreis an eine Wechselspannungsquelle angeschlossen, wobei neben dem ersten steuerbaren Schaltelement ein weiteres Schaltelement vorgesehen ist und beide Schaltelemente anti-parallel zueinander in dem Heizstromkreis angeordnet sind. Insbesondere kann es sich bei den steuerbaren Schaltelementen um Thyristoren handeln, denen das externe Steuersignal über zwei Optotriacs zugeführt wird. Diese Lösung ermöglicht zum einen einen großen Strombereich für den Heizstrom, zum anderen können einfache Sensorbauteile in Form der Optotriacs verwendet werden, so dass die Schaltungsanordnung insgesamt sehr kostengünstig gehalten ist.

Vorzugsweise weist der Heizstromkreis zwei Heizungseinrichtungen auf, eine für Luft und eine für Wasser, wobei jeder Heizungseinrichtung jeweils ein eigener von Hand zu betätigender Schalter zugeordnet ist. Der Schalter kann gleichzeitig auch der Schalter zum Betätigen des entsprechenden Medienventils sein, so dass - vorausgesetzt das externe Steuersignal ermöglicht das Fließen eines Heizstroms - bei einer Betätigung des Schalters zum einen das entsprechende Medium abgegeben und zum anderen zugleich die entsprechende Heizungseinrichtung aktiviert wird.

Gemäß einer vorteilhaften Weiterbildung der Erfindung ist ferner eine Beleuchtungseinrichtung vorgesehen, welche bei einer Aktivierung zumindest einer der beiden Medienheizungen ebenfalls aktiviert wird. Ein entsprechendes Eingangssignal zum Einschalten der Lichtquelle kann durch einen Spannungsabfall innerhalb des Heizstromkreises gewonnen werden, der der Beleuchtungseinrichtung über einen Optokoppler zugeführt wird. Vorzugsweise ist für die Beleuchtungseinrichtung ein Steuerblock vorgesehen, der darüber hinaus dafür sorgt, dass die Beleuchtungseinrichtung auch nach einer Deaktivierung der Medienheizung für eine vorgegebene Nachlaufzeit weiterhin eingeschaltet bleibt.

Sowohl der Heizstromkreis als auch die Beleuchtungseinrichtung können an eine gemeinsame Stromversorgungsquelle angeschlossen werden, wobei für den Fall, dass die Stromversorgungsquelle eine Wechselspannung abgibt, der Beleuchtungseinrichtung vorzugsweise einen Gleichrichter vorgeschaltet ist.

Nachfolgend soll die Erfindung anhand der beiliegenden Zeichnung näher erläutert werden. Es zeigen:
- **Fig. 1**: ein zahnärztliches Spritzhandstück, bei dem die erfindungsgemäße Steuerschaltung zum Einsatz kommen soll, in seitlicher Ansicht;
- **Fig. 2**: das zahnärztliche Spritzhandstück im Teilschnitt;
- **Fig. 3**: eine schematische Darstellung der erfindungsgemäßen Steuerschaltung.

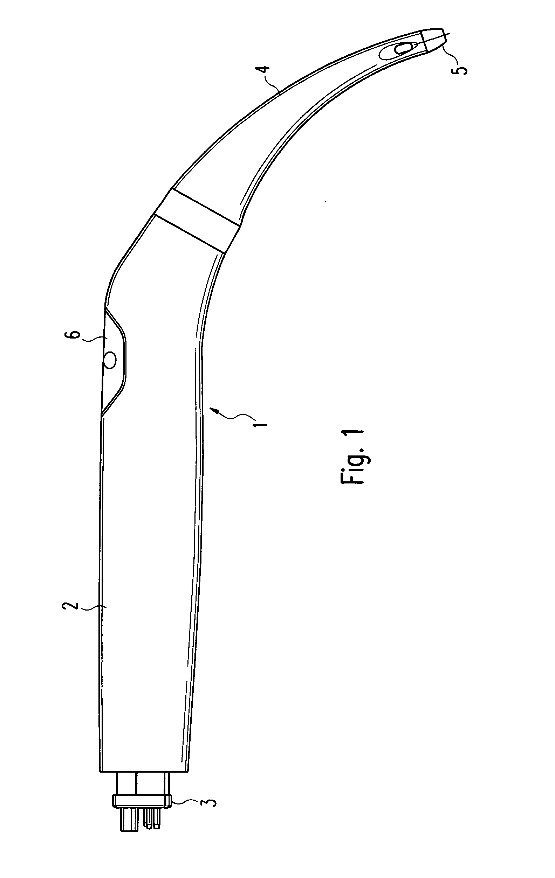

Das in Fig. 1 dargestellte zahnärztliche Spritzhandstück 1 besteht aus einem länglichen Griffkörper 2, an dessen Rückseite eine Medienkupplung 3 angeordnet ist, über die das Handstück 1 an einen üblichen Versorgungsschlauch eines zahnärztlichen Behandlungsplatzes angeschlossen werden kann. Die Medienkupplung 3 weist hierfür einzelne Anschlussstutzen für die Medien Luft und Wasser sowie weitere Versorgungsleitungen für Strom und Licht auf.

Am vorderen Ende des Griffkörpers 2 ist ein gebogener Düsenkörper 4 angeordnet, an dessen freien Ende sich eine Düse 5 zum Abgeben von Luft und/oder Wasser befindet. Für den Fall, dass Luft und Wasser gleichzeitig abgegeben werden, wird das Handstück im sog. Spraybetrieb betrieben. Wie später erläutert werden wird, ermöglicht der Düsenkörper 4 darüber hinaus auch, Licht auf die zu behandelnde Stelle zu richten.

Im vorderen Bereich des länglichen Griffkörpers 2 befindet sich an dessen Oberseite ein Tastfeld 6 mit zwei Betätigungselementen für die Medien Luft und Wasser. Über die beiden Betätigungselemente kann jeweils das Ventil für die entsprechende Medienleitung geöffnet sowie gleichzeitig ein Schalter zum Aktivieren der entsprechenden Medienheizung geschlossen werden. Bei einem gleichzeitigen Betätigen beider Betätigungselemente werden die Medienleitungen für Luft und Wasser gleichzeitig geöffnet, so dass Luft und Wasser mit Hilfe der am vorderen Ende des Düsenkörpers 4 angeordneten Düse 5 in Form eines Sprays abgegeben werden. Das Handstück befindet sich dann in dem oben genannten Spraybetrieb.

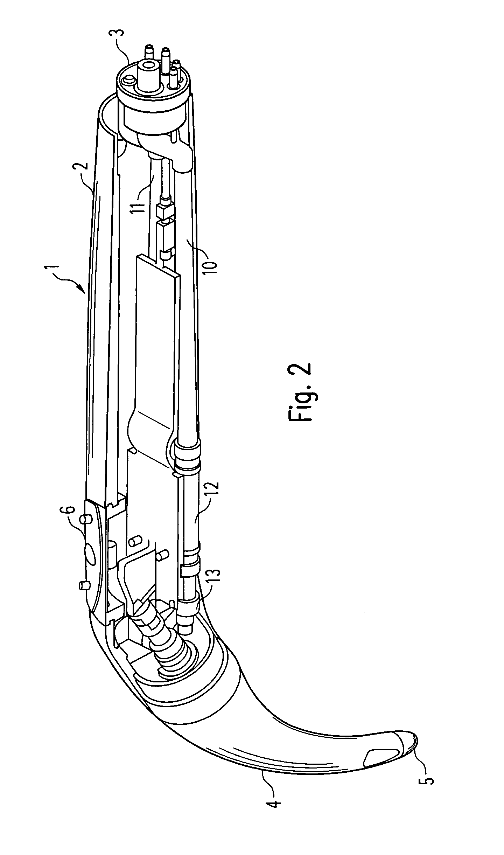

Fig. 2 zeigt einen Großteil der im Inneren des Handstücks 1 angeordneten Elemente. Aus Gründen der Übersichtlichkeit sind die über das Tastfeld 6 zu betätigenden Schalthebel zum Öffnen der Medienleitungen und Einschalten der Medienheizungen ebenso nicht dargestellt, wie die elektronischen Komponenten der später noch erläuterten Steuerschaltung für die Heizungseinrichtung.

Innerhalb des Griffkörpers 2 verlaufen in Längsrichtung die beiden Medienleitungen 10 und 11 für Luft bzw. Wasser, die an ihrem rückwärtigen Ende mit den entsprechenden Anschlussstutzen der Medienkupplung 3 verbunden sind. Im vorderen Bereich der Medienleitung 10 für Luft befindet sich ein Heizelement 12, mit dessen Hilfe die durch die Medienleitung 10 strömende Luft erwärmt wird. Bei diesem Heizelement handelt es sich um eine übliche Heizpatrone, welche die Medienleitung 10 fortsetzt, so dass die Luft beim Durchströmen der Heizpatrone 12 erwärmt wird. In gleicher Weise ist auch ein entsprechendes Heizelement für die Medienleitung 11 für Wasser vorgesehen.

Am vorderen Ende des länglichen Griffkörpers 2 befindet sich ferner eine Halterung 13 zum Halten einer Lichtquelle. Bei dieser Lichtquelle handelt es sich um eine Glühbirne, die nach ihrem Einschalten Licht in den gebogenen Düsenkörper 4 einstrahlt, dass über entsprechende Lichtleitmittel - bspw. ein Glasfaserbündel oder dergleichen - zur Düse 5 weitergeleitet wird. Die von der Lichtquelle abgegebenen Lichtstrahlen werden somit auf die gleiche Stelle gerichtet wie die Luft und/oder das Wasser, so dass die über die Düse 5 anvisierte Stelle von dem Benutzer des Handstücks optimal betrachtet werden kann.

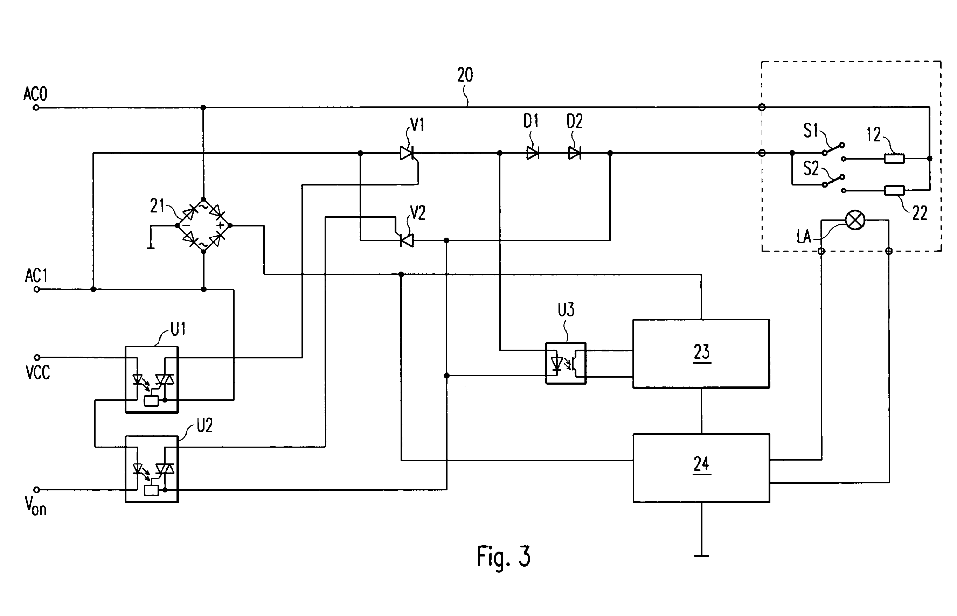

Während einer zahnärztlichen Behandlung wird somit gleichzeitig mit dem Öffnen einer Medienleitung das entsprechende Heizelement aktiviert, um das Medium in etwa auf Körpertemperatur zu erwärmen. Diese automatische Erwärmung ist in der Regel erwünscht, um bei dem Patienten, in dessen Mundraum das bzw. die Medien eingespritzt werden, keine Reflexe oder Abwehrreaktionen hervorzurufen. Auf der anderen Seite soll in bestimmten Fällen trotz Öffnen des Medienventils die Heizung bewußt ausgeschaltet bleiben. Dies wird durch die erfindungsgemäße Steuerschaltung ermöglicht, die nachfolgend anhand von Fig. 3 erläutert werden soll.

Wesentlicher Bestandteil der Steuerschaltung ist ein Heizstromkreis 20, der mit seinen beiden Anschlüssen an eine Stromversorgungsquelle AC0, AC1 angeschlossen ist. Diese gibt eine Wechselspannung von vorzugsweise 24V ab. In dem Heizstromkreis 20 ist eine Parallelschaltung aus zwei - schematisch als Wiederständen dargestellten - Heizelementen 12 und 22 für Luft und Wasser angeordnet, wobei in Serie zu jedem Heizelement 12 bzw. 22 jeweils ein Schalter S1 bzw. S2 angeordnet ist, der bei einer Betätigung des entsprechenden Tastfeldes an der Handstückoberseite gleichzeitig mit dem Öffnen des entsprechenden Medienventils geschlossen wird.

Um die Möglichkeit zu eröffnen, die Heizung über die externen Gerätesteuerung zu deaktivieren bzw. einzuschalten, ist ferner in dem Heizstromkreis 20 eine Parallelschaltung aus zwei anti-parallel angeordneten Thyristoren V1 und V2 vorgesehen, welche wahlweise in einen leitenden oder nicht-leitenden Zustand versetzt werden können. Die anti-parallele Anordnung der beiden Thyristoren V1, V2 ist erforderlich, da der Heizstromkreis 20 von einer Wechselspannungsquelle versorgt wird und in beiden Halbwellen der Wechselspannung ein Stromfluss durch die Heizelemente 12 bzw. 22 erfolgen soll.

Die Steuerung der beiden Thyristoren V1 und V2 erfolgt über ein von der Gerätesteuerung erzeugtes externes Steuersignal, das an zwei weitere Anschlüsse VCC und Vₒₙ der Steuerschaltung angelegt wird. Dieses externe Steuersignal wird den beiden Thyristoren V1 und V2 jeweils über einen Optotriac U1 bzw. U2 weitergeleitet, so dass bei Anlegen eines Einschalt-Signals die Thyristoren V1 und V2 eingeschaltet werden. Wird in diesem Zustand einer der beiden Schalter S1 oder S2 für die beiden Heizelemente 12 bzw. 22 geschlossen, so fließt Strom durch das entsprechende Heizelement 12, 22 und das jeweilige Medium, dessen Medienventil gleichzeitig mit dem Schließen des entsprechenden Schalters S1 oder S2 geöffnet wird, wird erwärmt.

Wird hingegen über die beiden Eingänge VCC und Vₒₙ ein Ausschaltsignal vorgegeben, so befinden sich die beiden Thyristoren in einem nicht-leitenden Zustand. Wird in diesem Fall eines der beiden Tastfelder an der Handstückoberseite betätigt, so wird zwar das entsprechende Medienventil geöffnet, das zugehörige Heizelement 12 bzw. 22 bleibt allerdings trotz Schließen des entsprechenden Schalters S1 bzw. S2 deaktiviert, da die beiden Thyristoren V1 und V2 keinen Stromfluß in dem Heizstromkreis 20 ermöglichen. Diese Abschaltung der Medienheizung kann insbesondere dann vorgesehen sein, wenn die Medienleitungen zur Intensiventkeimung mit einer Reinigungsflüssigkeit durchspült werden sollen. Ferner kann auch während einer Behandlung die Medienheizung bewußt abgeschaltet werden, um beispielsweise die Reflexe des Patienten zu testen.

In Ergänzung zu den beiden Heizelementen 12 und 22 ist in der Schaltungsanordnung ferner eine Lichtquelle in Form einer Glühlampe LA angeordnet, die ebenfalls bei einer Aktivierung der Heizelemente 12, 22 eingeschaltet werden soll. Hierzu ist ein Steuerblock 23 vorgesehen, der entsprechende Ansteuersignale für eine Lichtversorgungseinheit 24 zum Betreiben der Glühlampe LA erzeugt. Ein Eingangssignal für den Steuerblock 23 wird durch einen Spannungsabfall innerhalb des Heizstromkreises 20 erzeugt, der im Falle des Einschaltens einer der beiden Schalter S1 bzw. S2 auftritt. Im dargestellten Beispiel wird der Spannungsabfall über zwei Dioden D1 und D2 verwendet, die in dem Parallelzweig eines der beiden Thyristoren V1, V2 angeordnet sind.

Der Spannungsabfall über die beiden Dioden D1 und D2 wird über einen Optokoppler U3 weitergeleitet, so dass dem Steuerblock 23 bei Fließen eines Heizstroms ein Rechtecksignal entsprechend der Frequenz der Wechselspannung zugeführt. Dieses Rechtecksignal wird von dem Steuerblock 23 als Startsignal zur Aktivierung der Lampe LA interpretiert, der daraufhin ein entsprechendes Steuersignal an die Lichtversorgungseinheit 24 weiterleitet, die der Glühlampe LA daraufhin einen entsprechenden Strom zuführt.

Der Steuerblock 23 für die Lichtversorgung weist ferner ein Zeitglied auf, welches nach einem Ausschalten der Heizelemente 12, 22 für eine gewisse Nachlaufzeit weiterhin ein Einschaltsignal für die Lichtversorgungseinheit 24 erzeugt. Hierdurch ist sichergestellt, dass auch nach einem Abschalten der beiden Medien das Licht für eine gewisse Nachlaufzeit nachleuchtet und die soeben behandelte Stelle betrachtet werden kann.

Die Stromversorgung der verschiedenen Komponenten für die Beleuchtungseinrichtung erfolgt ebenfalls über die Stromversorgungsanschlüsse AC0 und AC1 des Heizstromkreises 20, wobei der Lichtversorgungseinheit allerdings ein Gleichrichter 21 vorgeordnet ist. Die Dioden D1 und D2 stellen in diesem Fall sehr einfache Sensorbauteile für die Aktivierung der Lichtversorgung dar, wodurch zusätzlich die Baukosten für die erfindungsgemäße Steuerschaltung reduziert werden. Da sie ferner nur in einer Halbwelle der Versorgungswechselspannung aktiv sind, treten bei der erfindungsgemäßen Schaltungsanordnung sehr geringe Verlustleistungen auf.

Die vorliegende Schaltungsanordnung ermöglicht somit einen großen Strombereich für die beiden Heizelemente. Da ferner einfache Sensorbauteile in Form der beiden Optotriacs und Dioden verwendet werden, kann die Schaltung auch kostengünstig hergestellt werden. Ferner wird die Möglichkeit eröffnet, die Medienheizung gezielt zu deaktivieren.

## Patentansprüche

1. Steuerschaltung zur Steuerung einer Medien-Heizungseinrichtung (12, 22) eines zahnärztlichen Handstücks (1),
mit einem Heizstromkreis (20), in dem ein von Hand zu betätigender Schalter (S1, S2) für die Aktivierung der Heizungseinrichtung (12, 22) angeordnet ist,
**gekennzeichnet durch**
ein in dem Heizstromkreis (20) angeordnetes weiteres steuerbares Schaltelement (V1, V2), welches in Abhängigkeit von einem externen Steuersignal (VCC, Vₒₙ) in einen leitenden bzw. nicht-leitenden Zustand versetzbar ist.

2. Steuerschaltung nach Anspruch 1,
**dadurch gekennzeichnet,**
**dass** der Heizstromkreis (20) an eine Wechselspannungsquelle (AC0, AC1) angeschlossen ist und zwei steuerbare Schaltelemente (V1, V2) vorgesehen sind, die anti-parallel in dem Heizstromkreis (20) angeordnet sind.

3. Steuerschaltung nach Anspruch 1 oder 2,
**dadurch gekennzeichnet,**
**dass** das externe Steuersignal (VCC, Vₒₙ) dem bzw. den steuerbaren Schaltelementen (V1, V2) über einen bzw. zwei Optotriacs (U1, U2) zugeführt wird.

4. Steuerschaltung nach einem der Ansprüche 1 bis 3,
**dadurch gekennzeichnet,**
**dass** es sich bei dem bzw. den steuerbaren Schaltelementen um Thyristoren (V1, V2) handelt.

5. Steuerschaltung nach einem der vorherigen Ansprüche,
**dadurch gekennzeichnet,**
**dass** in dem Heizstromkreis (20) zwei von Hand zu betätigende Schalter (S1, S2) parallel zueinander angeordnet sind, wobei der eine Schalter (S1) zur Aktivierung der Luft-Medienheizung und der andere Schalter (S2) zur Aktivierung der Wasser-Medienheizung des zahnärztlichen Handstücks (1) vorgesehen ist.

6. Steuerschaltung nach einem der vorherigen Ansprüche,
**dadurch gekennzeichnet,**
**dass** bei einer Betätigung des bzw. der Schalter (S1, S2) gleichzeitig ein Ventil für das entsprechende Medium geöffnet wird.

7. Steuerschaltung nach einem der vorherigen Ansprüche,
**dadurch gekennzeichnet,**
**dass** ferner eine Beleuchtungseinrichtung (LA) für das zahnärztliche Handstück (1) vorgesehen ist, die bei einer Aktivierung der Heizungseinrichtung (12, 22) ebenfalls aktiviert wird.

8. Steuerschaltung nach Anspruch 7,
**dadurch gekennzeichnet,**
**dass** die Beleuchtungseinrichtung (LA) nach der Deaktivierung der Heizungseinrichtung (12, 22) für eine vorgegebenen Nachlaufzeit weiterhin aktiviert bleibt.

9. Steuerschaltung nach Anspruch 7 oder 8,
**dadurch gekennzeichnet,**
**dass** die Beleuchtungseinrichtung einen Steuerblock (23) aufweist, der in Abhängigkeit von einem Eingangssignal eine Lichtversorgungseinheit (24) zum Betreiben einer Lichtquelle (LA) ansteuert.

10. Steuerschaltung nach Anspruch 9,
**dadurch gekennzeichnet,**
**dass** dem Steuerblock (23) als Eingangssignal ein Spannungsabfall innerhalb des Heizstromkreises (20) zugeführt wird.

11. Steuerschaltung nach Anspruch 10,
**dadurch gekennzeichnet,**
**dass** der Spannungsabfall innerhalb des Heizstromkreises (20) dem Steuerblock (23) über einen Optokoppler (U3) zugeführt wird.

12. Steuerschaltung nach einem der Ansprüche 7 bis 11,
**dadurch gekennzeichnet,**
**dass** der Heizstromkreis (20) und die Beleuchtungseinrichtung an eine gemeinsame Stromversorgungsquelle (AC0, AC1) angeschlossen sind.

13. Steuerschaltung nach Anspruch 12,
**dadurch gekennzeichnet,**
**dass** die Stromversorgungsquelle (AC0, AC1) eine Wechselspannung abgibt, wobei der Beleuchtungseinrichtung ein Gleichrichter (21) vorgeschaltet ist.

14. Zahnärztliches Handstück mit einer Heizungseinrichtung zum Beheizen der Luft- und/oder Wasserversorgung,
**gekennzeichnet durch**
eine Steuerschaltung nach einem der vorherigen Ansprüche.

15. Zahnärztliches Handstück nach Anspruch 14,
**dadurch gekennzeichnet,**
**dass** es sich um ein zahnärztliches Spritzhandstück (1) handelt.

16. Zahnärztliches Spritzhandstück (1) mit einer ein- und ausschaltbaren Heizungseinrichtung (12, 22) für das/die hindurchfließende(n) Medium/Medien,
**dadurch gekennzeichnet,**
**dass** die Heizungseinrichtung (12, 22) deaktivierbar ist, wenn das oder zumindest eines der Medien zur Reinigung und/oder Entkeimung des Spritzhandstücks (1) bestimmt ist.

17. Zahnärztliches Spritzhandstück nach Anspruch 16,
**dadurch gekennzeichnet,**
**dass** die Heizungseinrichtung (12, 22) über ein externes Steuersignal (VCC, Vₒₙ) deaktivierbar ist.
